# EUROPEAN PATENT APPLICATION

(11) **EP 4 844 715 A1**
(43) Date of publication of application: **25.11.2026**
(21) Application number: 26175029.3
(22) Date of filing: 28.04.2026
(51) Int. Cl.: G07C 9/00, G07C 9/20, G06N 20/00, G08B 13/196

(54) **SYSTEM AND METHOD FOR CONTROLLING ACCESS THROUGH A DOOR WITH ADAPTIVE ENTRY TIME OVERRIDES**

(30) Priority: 20.05.2025 US 202519213546
(71) Applicant: Honeywell International Inc., Charlotte, NC 28202 (US)
(72) Inventor: S, Ashokkumar, Charlotte, 28202 (US); ESWARI, Anitha, Charlotte, 28202 (US)
(74) Representative: Haseltine Lake Kempner LLP

(57) **Abstract**

An access control system and method for controlling access to a facility door uses video analytics to classify scenarios approaching the door. A video surveillance camera captures a video stream of the approaching scenario. The system applies analytics to classify the scenario type and automatically adjusts door entry time periods based on the classification. For a first scenario type, the system uses a default time period before issuing a door held open alarm. For a second scenario type, such as users transporting objects or having detectable handicaps, the system overrides the default with an appropriate extended time period. The system can learn patterns of scenario types over time and predict when extended access periods will likely be needed. Video analytics can also detect when additional time is needed and automatically extend the access period to help prevent unnecessary alarms from being raised.

## Description

### TECHNICAL FIELD

The present disclosure relates to access control systems, and more particularly to access control systems that include programmable entry times for enhanced accessibility.

### BACKGROUND

A number of access control systems may be employed in a variety of different facilities in order to permit access to authorized individuals while limiting access to individuals who are not authorized. Many access control systems designate a predetermined entry time for an individual to pass through an access door. If they take longer than the predetermined entry time, an alarm may sound. In some cases, there may be a desire to bring a large shipment through an access door, which may take longer than the predetermined entry time. In some cases, an individual may move too slowly to be able to pass through the access door within the predetermined entry time. As an example, an individual may be in a wheelchair, or may be using crutches. What would be desirable are systems and methods that can detect and classify various scenarios approaching a door, and based on the detected scenario, adaptively adjust the predetermined entry time to help prevent unnecessary alarms from being raised.

### SUMMARY

The present disclosure relates to access control systems, and more particularly to access control systems that adjust entry times in accordance with a detected behavior. An example may be found in an access control system for controlling access to a door of a facility. The access control system includes an access control reader, a video surveillance camera, and a controller. The access control reader is configured to read a user access token presented by a user, unlock the door when the user access token is determined to grant the user access through the door, and to monitor a state of the door, wherein the state of the door is either in an open state or a closed state. The video surveillance camera has a Field-Of-View (FOV) that captures a video stream of a scenario approaching the door. The controller is configured to apply video analytics to the video stream to classify the scenario approaching the door into one of a plurality of scenario types. When the scenario approaching the door is classified in a first one of the plurality of scenario types, the controller is configured to unlock the door when the user access token is determined to grant the user access through the door, and to issue a door held open alarm when the door remains in the open state for a period of time that exceeds a default door entry time period. When the scenario approaching the door is classified in a second one of the plurality of scenario types, the controller is configured to unlock the door when the user access token is determined to grant the user access through the door, automatically override the default door entry time period with a first override door entry time period, and issue a door held open alarm when the door remains in the open state for a period of time that exceeds the first override door entry time period.

Another example may be found in a method for controlling access to a door of a facility. The method includes applying video analytics to a video stream captured by a video surveillance camera having a Field-Of-View (FOV) that captures a scenario approaching the door, the video analytics classifying the scenario approaching the door into one of a plurality of scenario types. A door entry time period is automatically set based on the scenario type of the scenario approaching the door. When the scenario approaching the door is classified in a first one of the plurality of scenario types, the method includes automatically setting the door entry time period to a first door entry time period, and issuing a door held open alarm when the door remains in an open state after unlocking the door for a period of time that exceeds the first door entry time period. When the scenario approaching the door is classified in a second one of the plurality of scenario types, the method includes automatically setting the door entry time period to a second door entry time period, and issuing a door held open alarm when the door remains in an open state after unlocking the door for a period of time that exceeds the second door entry time period.

Another example may be found in an access control system for controlling access through a door of a facility. The access control system includes an access control reader that is configured to monitor a state of the door, wherein the state of the door is either in an open state or a closed state. A video surveillance camera has a Field-Of-View (FOV) that captures a video stream of a scenario approaching the door. A controller is configured to apply video analytics to the video stream to classify the scenario approaching the door into one of a plurality of scenario types. When the scenario approaching the door is classified in a first one of the plurality of scenario types, the controller is configured to issue a door held open alarm when the door remains in the open state for a period of time that exceeds a default door entry time period. When the scenario approaching the door is classified in a second one of the plurality of scenario types, the controller is configured to automatically override the default door entry time period with a first override door entry time period and to issue a door held open alarm when the door remains in the open state for a period of time that exceeds the first override door entry time period.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative embodiments of the disclosure in connection with the accompanying drawings, in which:
Figure 1 is a schematic block diagram showing an illustrative access control system;
Figure 2 is a flow diagram showing an illustrative method for controlling access to a door of a facility;
Figure 3 is a flow diagram showing an illustrative method;
Figure 4 is a schematic diagram showing an illustrative use case; and
Figure 5 is a schematic diagram showing an illustrative use case.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### DESCRIPTION

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

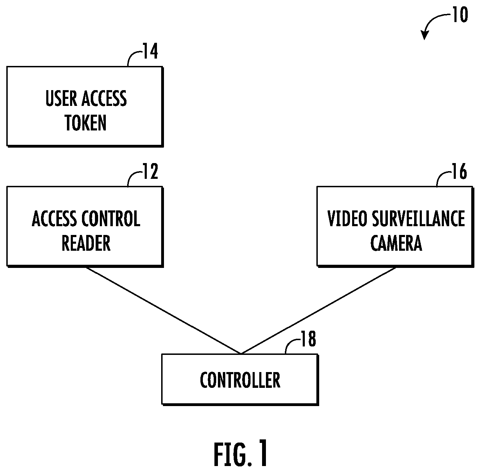

Figure 1 is a schematic block diagram showing an illustrative access control system 10 for controlling access to a door of a facility. The access control system 10 includes an access control reader 12. While a single access control reader 12 is shown, it will be appreciated that the facility may include a large number of doors, and thus the access control system 10 may include substantially more than just one single access control reader 12. The access control reader 12 is configured to read a user access token 14 that is presented by a user. In some cases, the access control reader 12 may be configured to read the user access token 14 presented by a user and may unlock the door when the user access token 14 is determined to grant the user access through the door. In some cases, the user access token 14 may include an access card that is swiped at the access control reader 12. In some cases, the user access token 14 may include an electronic token that is wirelessly communicated to the access control reader 12 (e.g. from a mobile device of the user). The access control reader 12 is configured to unlock the door when the user access token 14 is determined to grant the user access through the door. The access control reader 12 is configured to monitor a state of the door, wherein the state of the door is either in an open state or a closed state. The access control system 10 includes a video surveillance camera 16 having a Field-Of-View (FOV) that captures a video stream of a scenario approaching the door. The access control reader 12 may include the controller 18 and/or the video surveillance camera 16. In some cases, at least part of the controller 18 may be implemented by the video surveillance camera 16. In some cases, at least part of the controller 18 may be implemented by the access control reader 12. In some cases, the controller 18 may be considered as being a distributed controller. In some cases, the controller 18 may be separate from the video surveillance camera 16 and the access control reader 12. In some cases, the controller 18, or parts thereof, may be implemented in the cloud.

The controller 18 is configured to apply video analytics to the video stream to classify a scenario approaching the door into one of a plurality of scenario types. When the scenario approaching the door is classified in a first one of the plurality of scenario types, the controller 18 is configured to unlock the door when the user access token 14 is determined to grant the user access through the door and to issue a door held open alarm when the door remains in the open state for a period of time that exceeds a default door entry time period. When the scenario approaching the door is classified in a second one of the plurality of scenario types, the controller 18 is configured to unlock the door when the user access token 14 is determined to grant the user access through the door, automatically override the default door entry time period with a first override door entry time period, and to issue a door held open alarm when the door remains in the open state for a period of time that exceeds the first override door entry time period.

In some cases, when the scenario approaching the door is classified in a third one of the plurality of scenario types, the controller 18 may be configured to unlock the door when the user access token 14 is determined to grant the user access through the door, automatically override the default door entry time period with a second override door entry time period that is different from the first override door entry time period, and issue a door held open alarm when the door remains in the open state for a period of time that exceeds the second override door entry time period. The first scenario may be considered as corresponding to normal operation. The second scenario may be considered as corresponding to when a situation is detected that is expected to require a first amount of additional time for a person to pass through. The third scenario may be considered as corresponding to when a situation is detected that is expected to require a second amount of additional time for a person to pass through. The second and third scenarios may independently represent detection of a person on crutches, for example, and a person hauling a large number of boxes. These are just examples.

In some cases, when the scenario approaching the door is expected to pass through the door within the default door entry time period, the controller 18 classifies the scenario into the first one of the plurality of scenario types. In some cases, when the scenario approaching the door is not expected to pass through the door within the default door entry time period, the controller 18 classifies the scenario into the second one of the plurality of scenario types. In some cases, the controller 18 may be configured to set the first override door entry time period to a value that is based at least in part on the scenario that is classified in the second one of the plurality of scenario types. This may correspond to, for example, the user transporting one or more objects through the door. This may correspond to, for example, the user having a handicap that is detectable by the applied video analytics. In some cases, when the scenario approaching the door is classified in the second one of the plurality of scenario types, and after overriding the default door entry time period with the first override door entry time period, the controller 18 may be configured to reset the door entry time period to the default door entry time period after the door is closed behind the user.

In some cases, the controller 18 may be configured to learn over time a pattern of when scenarios classified in the second one of the plurality of scenario types occur. The controller 18 may be configured to determine a predicted time of when a scenario that is classified in the second one of the plurality of scenario types is predicted to next occur based at least in part on the learned pattern. The controller 18 may be configured to automatically override the default door entry time period with the first override door entry time period at the predicted time. In some cases, the controller 18 may be configured to apply video analytics to the video stream to determine when a scenario approaching the door that is classified in the second one of the plurality of scenario types is not expected to pass through the door by the end of the first override door entry time period, and in response, automatically extend the first override door entry time period.

In some cases, the controller 18 may be configured to apply video analytics to the video stream to classify the scenario approaching the door into one of a plurality of scenario types. When the scenario approaching the door is classified in a first one of the plurality of scenario types, the controller 18 may be configured to issue a door held open alarm when the door remains in the open state for a period of time that exceeds a default door entry time period. When the scenario approaching the door is classified in a second one of the plurality of scenario types, the controller 18 may be configured to automatically override the default door entry time period with a first override door entry time period and to issue a door held open alarm when the door remains in the open state for a period of time that exceeds the first override door entry time period. In some cases, the controller 18 may be configured to automatically unlock the door for a predetermined door entry time period in which the user with the user access tokens 14 needs to pass through the door. The controller 18 may be configured to automatically override the default door entry time period with an extended override door entry time period that has a duration of at least the predetermined door entry time period.

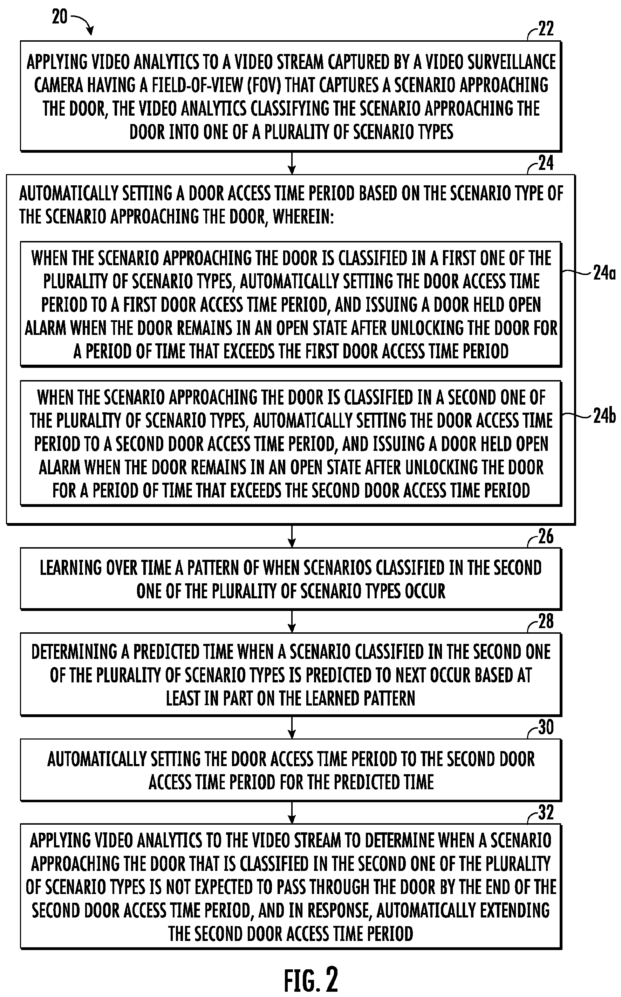

Figure 2 is a flow diagram showing an illustrative method 20 for controlling access to a door of a facility. The illustrative method 20 includes applying video analytics to a video stream captured by a video surveillance camera (such as the video surveillance camera 16) having a Field-Of-View (FOV) that captures at least part of a scenario approaching the door, the video analytics classifying the scenario approaching the door into one of a plurality of scenario types, as indicated at block 22. The method 20 includes automatically setting a door entry time period based on the scenario type of the scenario approaching the door, as indicated at block 24. When the scenario approaching the door is classified in a first one of the plurality of scenario types, the method 20 includes automatically setting the door entry time period to a first door entry time period, and issuing a door held open alarm when the door remains in an open state after unlocking the door for a period of time that exceeds the first door entry time period, as indicated at block 24a. When the scenario approaching the door is classified in a second one of the plurality of scenario types, the method 20 includes automatically setting the door entry time period to a second door entry time period, and issuing a door held open alarm when the door remains in an open state after unlocking the door for a period of time that exceeds the second door entry time period, as indicated at block 24b. As an example, the scenario that is classified in the second one of the plurality of scenario types may include a user transporting one or more large objects through the door. In some cases, the scenario that is classified in the second one of the plurality of scenario types may include a user having a handicap that is detectable by the applied video analytics.

In some cases, the method 20 may include learning over time a pattern of when scenarios classified in the second one of the plurality of scenario types occur, as indicated at block 26. A predicted time when a scenario classified in the second one of the plurality of scenario types is predicted to next occur is determined based at least in part on the learned pattern, as indicated at block 28. The door entry time period is automatically set to the second door entry time period for the predicted time (or a range of time that includes the predicted time), as indicated at block 30. In some cases, the method 20 may further include applying video analytics to the video stream to determine when the scenario approaching the door that is classified in the second one of the plurality of scenario types is taking longer than expected and is not expected to pass through the door by the end of the second door entry time period, and in response, automatically extending the second door entry time period, as indicated at block 32.

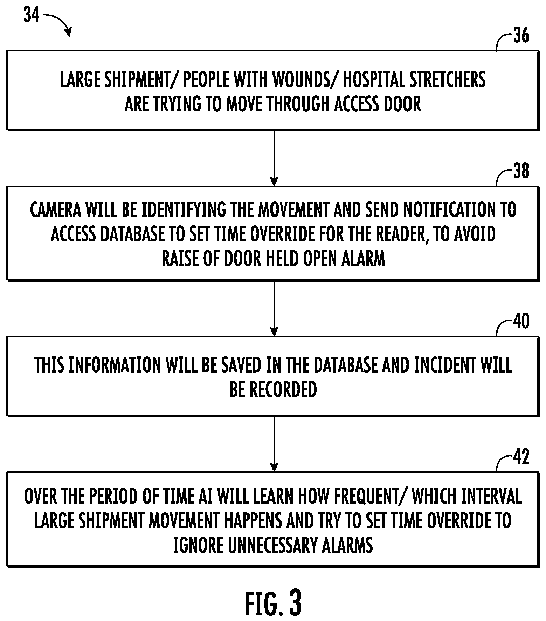

Figure 3 is a flow diagram showing an illustrative method 34. A situation may be detected in which a large shipment or wounded individuals are attempting to move through an access door, as indicated at block 36. A camera and video analytics detect the particular situation and send a notification to avoid a door open alarm, as indicated at block 38. The information is saved for future use, as indicated at block 40. The system learns over time a pattern of when certain situations tend to occur, and based on the learned pattern, the system sets an appropriate door entry time to automatically accommodate one or more future predicted situations, as indicated at block 42.

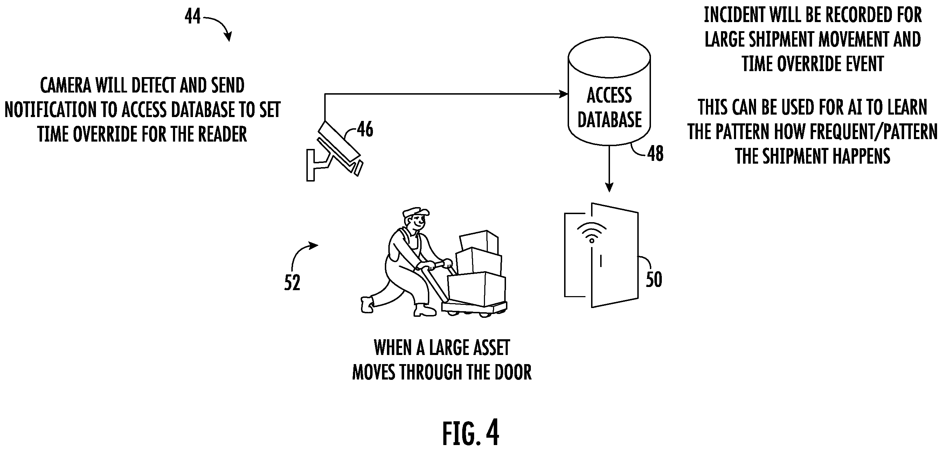

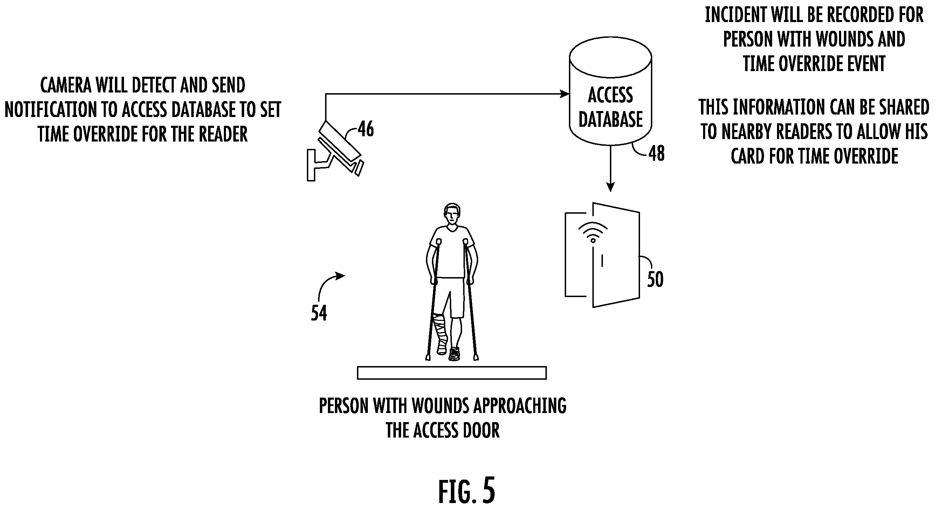

Figure 4 is a schematic block diagram showing an access control system 44 near an access door. The access control system 44 includes a video camera 46 that is operably coupled with an access database 48, which in turn is operably coupled with an access-controlled door 50. In Figure 4, the access control system 44 has detected a situation 52 in which a person is moving a large shipment through the access-controlled door 50. The video camera 46 (and video analytics) detects the situation 52 and notifies the access database 48 to adjust a door entry time, which is communicated to the access-controlled door 50. In some cases, the incident is recorded for machine learning and future pattern detection. In Figure 5, the access control system 44 has detected a situation 54 in which a person is walking with crutches through the access-controlled door 50. The video camera 46 (and video analytics) detects the situation 54 and notifies the access database 48 to adjust a door entry time, which is communicated to the access-controlled door 50. In some cases, the incident is recorded for machine learning and future pattern detection.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. An access control system for controlling access to a door of a facility, comprising:
an access control reader configured to:
read a user access token presented by a user;
unlock the door when the user access token is determined to grant the user access through the door;
monitor a state of the door, wherein the state of the door is either in an open state or a closed state;
a video surveillance camera having a Field-Of-View (FOV) that captures a video stream of a scenario approaching the door;
a controller configured to:
apply video analytics to the video stream to classify the scenario approaching the door into one of a plurality of scenario types;
when the scenario approaching the door is classified in a first one of the plurality of scenario types:
unlock the door when the user access token is determined to grant the user access through the door;
issue a door held open alarm when the door remains in the open state for a period of time that exceeds a default door entry time period;
when the scenario approaching the door is classified in a second one of the plurality of scenario types:
unlock the door when the user access token is determined to grant the user access through the door;
automatically override the default door entry time period with a first override door entry time period; and
issue a door held open alarm when the door remains in the open state for a period of time that exceeds the first override door entry time period.

2. The access control system of claim 1, wherein, when the scenario approaching the door is classified in a third one of the plurality of scenario types the controller is configured to:
unlock the door when the user access token is determined to grant the user access through the door;
automatically override the default door entry time period with a second override door entry time period that is different from the first override door entry time period; and
issue a door held open alarm when the door remains in the open state for a period of time that exceeds the second override door entry time period.

3. The access control system of either of claims 1 or 2, wherein at least part of the controller is implemented by the video surveillance camera.

4. The access control system of any of claims 1 to 3, wherein at least part of the controller is implemented by the access control reader.

5. The access control system of any of claims 1 to 4, wherein:
when the scenario approaching the door is expected to pass through the door within the default door entry time period, the controller classifies the scenario into the first one of the plurality of scenario types; and
when scenario approaching the door is not expected to pass through the door within the default door entry time period, the controller classifies the scenario into the second one of the plurality of scenario types.

6. The access control system of any of claims 1 to 5, wherein the controller is configured to set the first override door entry time period to a value that is based at least in part on the scenario that is classified in the second one of the plurality of scenario types.

7. The access control system of any of claims 1 to 6, wherein:
the scenario that is classified in the second one of the plurality of scenario types comprises the user transporting one or more objects; or
the scenario that is classified in the second one of the plurality of scenario types comprises the user having a handicap that is detectable by the applied video analytics.

8. The access control system of any of claims 1 to 7, wherein when the scenario approaching the door is classified in the second one of the plurality of scenario types, and after overriding the default door entry time period with the first override door entry time period, resetting the door entry time period to the default door entry time period after the door is closed behind the user.

9. The access control system of any of claims 1 to 8, wherein the controller is configured to:
learn over time a pattern of when scenarios classified in the second one of the plurality of scenario types occur;
determine a predicted time of when a scenario that is classified in the second one of the plurality of scenario types is predicted to next occur based at least in part on the learned pattern; and
automatically override the default door entry time period with the first override door entry time period for the predicted time.

10. The access control system of any of claims 1 to 9, wherein the user access token comprises one or more of:
an access card that is swiped at the access control reader; and
an electronic token that is wirelessly communicated to the access control reader.

11. The access control system of any of claims 1 to 10, wherein the controller is configured to apply video analytics to the video stream to determine when a scenario approaching the door that is classified in the second one of the plurality of scenario types is not expected to pass through the door by the end of the first override door entry time period, and in response automatically extending the first override door entry time period.

12. A method for controlling access to a door of a facility, the method comprising:
applying video analytics to a video stream captured by a video surveillance camera having a Field-Of-View (FOV) that captures a scenario approaching the door, the video analytics classifying the scenario approaching the door into one of a plurality of scenario types; and
automatically setting a door entry time period based on the scenario type of the scenario approaching the door, wherein:
when the scenario approaching the door is classified in a first one of the plurality of scenario types, automatically setting the door entry time period to a first door entry time period, and issuing a door held open alarm when the door remains in an open state after unlocking the door for a period of time that exceeds the first door entry time period; and
when the scenario approaching the door is classified in a second one of the plurality of scenario types, automatically setting the door entry time period to a second door entry time period, and issuing a door held open alarm when the door remains in an open state after unlocking the door for a period of time that exceeds the second door entry time period.

13. The method of claim 12, comprising:
learning over time a pattern of when scenarios classified in the second one of the plurality of scenario types occur;
determining a predicted time when a scenario classified in the second one of the plurality of scenario types is predicted to next occur based at least in part on the learned pattern; and
automatically setting the door entry time period to the second door entry time period for the predicted time.

14. The method of either of claims 12 or 13, comprising applying video analytics to the video stream to determine when a scenario approaching the door that is classified in the second one of the plurality of scenario types is not expected to pass through the door by the end of the second door entry time period, and in response, automatically extending the second door entry time period.

15. An access control system for controlling access through a door of a facility, comprising:
an access control reader configured to monitor a state of the door, wherein the state of the door is either in an open state or a closed state;
a video surveillance camera having a Field-Of-View (FOV) that captures a video stream of a scenario approaching the door;
a controller configured to:
apply video analytics to the video stream to classify the scenario approaching the door into one of a plurality of scenario types;
when the scenario approaching the door is classified in a first one of the plurality of scenario types:
issue a door held open alarm when the door remains in the open state for a period of time that exceeds a default door entry time period;
when the scenario approaching the door is classified in a second one of the plurality of scenario types:
automatically override the default door entry time period with a first override door entry time period; and
issue a door held open alarm when the door remains in the open state for a period of time that exceeds the first override door entry time period.
